# EUROPEAN PATENT APPLICATION

(11) **EP 2 947 782 A1**
(43) Date of publication of application: **25.11.2015**
(21) Application number: 13871299.7
(22) Date of filing: 18.01.2013
(51) Int. Cl.: H04B 1/38, H04M 1/06

(54) **HOLDER FOR MOBILE TERMINAL**

(71) Applicant: Crucialtec Co., Ltd., Asan-si, Chungcheongnam-do 336-795 (KR); Himec, Gumi-si, Gyeongsangbuk-do 730-130 (KR)
(72) Inventor: KIM, Kwang Il, Gumi-si Gyeongsangbuk-do 730-743 (KR)
(74) Representative: Beck & Rössig European Patent Attorneys
(86) International application number: PCT/KR2013/000424
(87) International publication number: WO 2014/112667

(57) **Abstract**

The present invention relates to a portable terminal holder, and more particularly, to a portable terminal holder which may be coupled to a portable terminal and easily changed into a holder to inclinedly support the portable terminal. The portable-terminal holder which is coupled to a rear surface of a portable terminal to inclinedly support the portable terminal against the ground, includes a plate spring elastically deformed into a spread state or a bent state and maintained in the deformed state, and a coupling member configured to couple the plate spring to the rear surface of the portable terminal, wherein the plate spring has a height (h1) in the bent state, which is greater than a height (h2) in the spread state, and thus inclinedly supports the portable terminal against the ground in the bent state.

## Description

### BACKGROUND

### Technical Field

The present invention relates to a portable terminal holder, and more particularly, to a portable terminal holder which may be coupled to a portable terminal and easily changed into a holder to inclinedly support the portable terminal.

### Background Art

Recently, electronic devices such as portable terminals including digital multimedia broadcastings (DMBs), portable multimedia players (PMPs), tablet PCs and smartphones, which are easy to carry and provide a lot of data through a video display unit, have been released variously.

Particularly, the portable terminals have additional functions such as a TV, movie appreciation, and a camera, other than its own mobile communication function, and thus gain massive popularity.

To see data through the portable terminal, an image output part (a display part) of the portable terminal should be maintained at a proper angle so that a user may see well. To this end, the user has to hold the portable terminal with one or both hands and maintain a fixed state, or lean the portable terminal against a wall or the like.

However, when the user directly holds the portable terminal, the user's shoulder and wrist are strained, and thus it is difficult to maintain the fixed state. Further, when the user leans the portable terminal against the wall, an installation place is limited, and thus it is very inconvenient.

Therefore, in order to lean the portable terminal for long hours at any place, a portable-terminal holder is used.

Since a conventional portable-terminal holder is detailedly disclosed in Korean Patent Publication No. 10-2009-0041540 and Korean Patent No. 10-1024928, the description thereof will be omitted.

However, there are some problems in that the conventional portable-terminal holder has a relatively complicated structure, or inconvenience in carrying when the portable-terminal holder is coupled with the portable terminal.

### SUMMARY

The present invention is directed to providing a portable-terminal holder which has a relatively simple structure and no inconvenience in carrying even when being coupled with the portable terminal, and which is easily changed and then used.

One aspect of the present invention provides a portable-terminal holder which is coupled to a rear surface of a portable terminal to inclinedly support the portable terminal against the ground, including a plate spring elastically deformed into a spread state or a bent state and maintained in the deformed state, and a coupling member configured to couple the plate spring to the rear surface of the portable terminal, wherein the plate spring has a height (h1) in the bent state, which is greater than a height (h2) in the spread state, and thus inclinedly supports the portable terminal against the ground in the bent state.

The plate spring in the spread state may be changed into the bent state by an external force pressing the plate spring.

The plate spring may have a bar shape which is formed long in a lengthwise direction (an X-axial direction) and formed to be narrow in a widthwise direction (a Y-axial direction) in the spread state, and when seeing from the X-axial direction in the spread state, the plate spring may be formed to be bent convexly in an arc shape in a thicknesswise direction (a Z-axial direction) of the plate spring opposite to the portable terminal.

The plate spring may be changed into the spread state having the bar shape of which both ends are spread or in the bent state of which the both ends are bent in the arc shape in a direction opposite to the portable terminal by the external force.

The coupling member may include an exterior member configured to cover the plate spring and having wing portions at both sides thereof to protrude, and an adhesive member configured to couple the wing portions to the rear surface of the portable terminal.

The coupling member may include an exterior member configured to cover the plate spring, a cover member configured to cover the exterior member, and an adhesive member configured to couple the cover member to the rear surface of the portable terminal, and the cover member may include wing portions disposed at both sides of the plate spring so that the adhesive member is coupled thereto, and a connection portion configured to connect the wing portions and disposed on an upper surface of the exterior member, and the connection portion may have a coupling hole, and the exterior member may have a coupling protrusion which is inserted into the coupling hole.

The holder may further include a protective case configured to cover the portable terminal, and the coupling member may couple the plate spring to a rear surface of the protective case so that the plate spring is coupled to the rear surface of the portable terminal through the protective case.

The holder may further include a protective case configured to cover the portable terminal, and the coupling member may be formed to cover the plate spring and have wing portions formed at both sides thereof, and the protective case may have insertion fixing holes in which the wing portions are inserted and coupled so that the plate spring is coupled to the rear surface of the portable terminal.

An installation groove in which the plate spring is inserted and disposed may be formed at the rear surface of the protective case, and the insertion fixing holes may be formed at both sides of the installation groove.

The portable-terminal holder according to the present invention, as described above, has the following effects.

The portable-terminal holder according to the present invention has a relatively simple structure and no inconvenience in carrying even when being coupled with the portable terminal, and is easily changed and then used.

That is, when the portable-terminal holder according to the present invention is not used as the holder, the both ends of the plate spring are pushed toward the portable terminal and changed into the spread state to be in close contact with the rear surface of the portable terminal, such that a volume thereof can be reduced and interference with other articles can be prevented. Therefore, the portable-terminal holder according to the present invention has excellent portability even when being coupled with the portable terminal.

And when the plate spring is used as the holder, the center of the plate spring is pressed in an one-touch direction so that the both ends of the plate spring is changed into the bent state in which the both ends thereof are bent in the direction opposite to the portable terminal, and thus the portable-terminal holder according to the present invention can be easily changed into the structure in which the portable terminal is inclinedly supported.

Further, in a state in which the plate spring is bent, the user can insert the fingers into the inner side of the plate spring, and can easily grasp the portable terminal even when moving.

### BRIEF DESCRIPTION OF DRAWINGS

FIG. 1 is a perspective view of a portable-terminal holder according to a first embodiment of the present invention.
FIG. 2 is an exploded perspective view of the portable-terminal holder according to the first embodiment of the present invention.
FIG. 3 is a cross-sectional view taken along line A-A' and line B-B' of a plate spring illustrated in FIG. 2.
FIG. 4 is a perspective view illustrating states in which the portable-terminal holder according to the first embodiment of the present invention is coupled to a portable terminal and elastically spread or bent.
FIG. 5 is a side view illustrating a state in which the portable terminal is inclinedly supported using the portable-terminal holder according to the first embodiment of the present invention.
FIG. 6 is a perspective view of a portable-terminal holder according to a second embodiment of the present invention.
FIG. 7 is an exploded perspective view of the portable-terminal holder according to the second embodiment of the present invention.
FIG. 8 is a perspective view illustrating states in which the portable-terminal holder according to the second embodiment of the present invention is coupled to a portable terminal and elastically spread or bent.
FIG. 9 is a perspective view of a portable-terminal holder according to a third embodiment of the present invention.
FIG. 10 is an exploded perspective view of the portable-terminal holder according to the third embodiment of the present invention.
FIG. 11 is a cross-sectional view taken along line C-C' of FIG. 9.

### DETAILED DESCRIPTION

### <First embodiment>

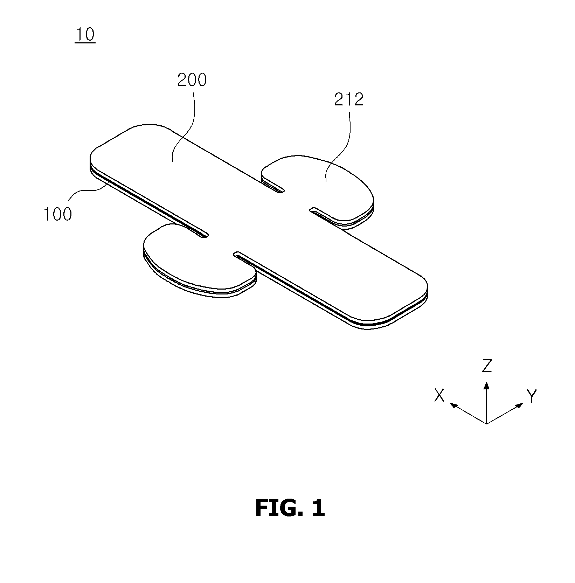

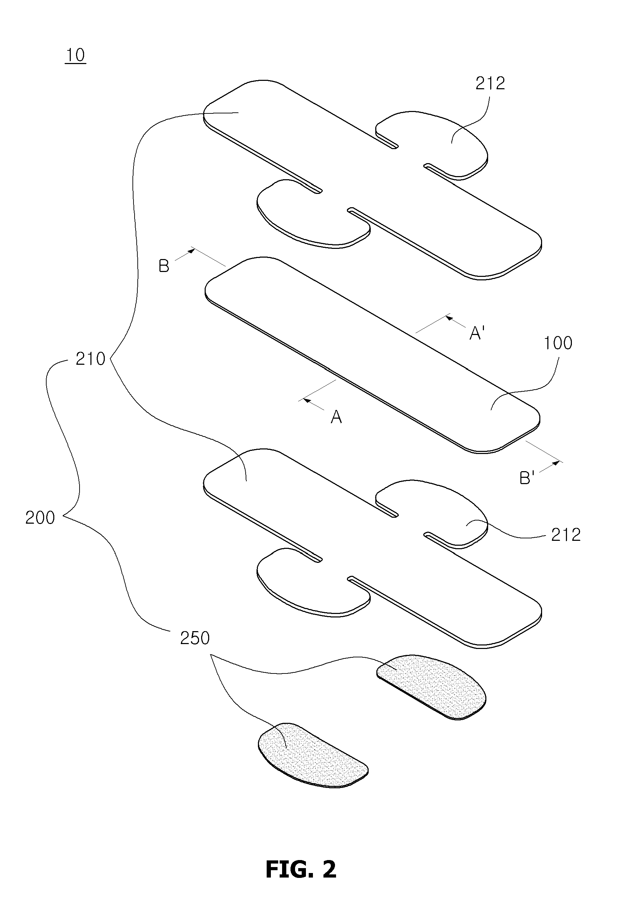

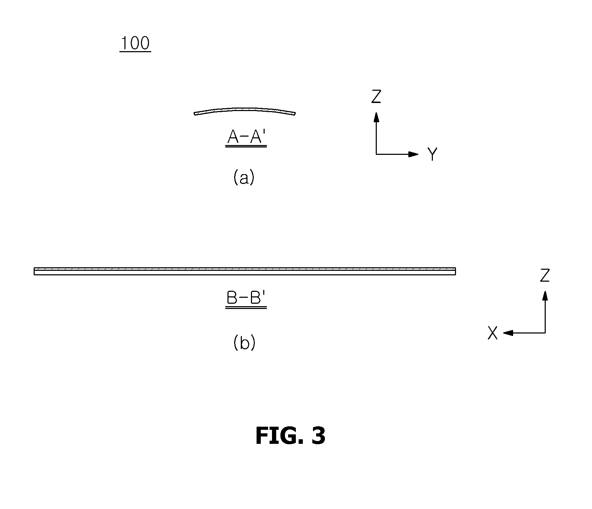

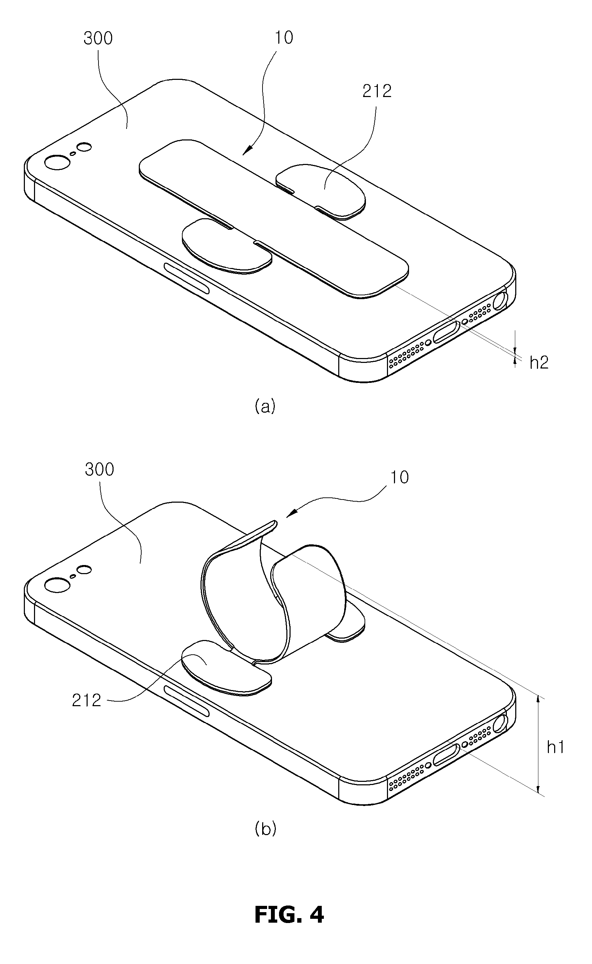

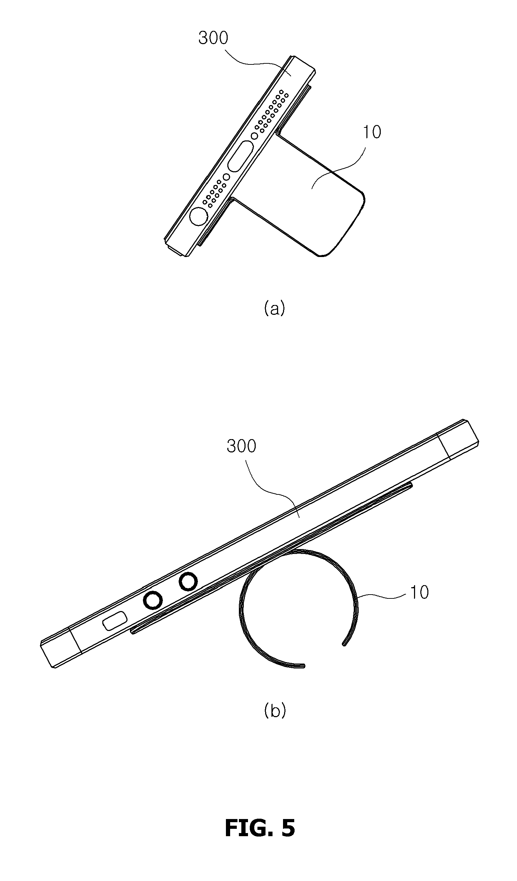

FIG. 1 is a perspective view of a portable-terminal holder according to a first embodiment of the present invention, FIG. 2 is an exploded perspective view of the portable-terminal holder according to the first embodiment of the present invention, FIG. 3 is a cross-sectional view taken along line A-A' and line B-B' of a plate spring illustrated in FIG. 2, FIG. 4 is a perspective view illustrating states in which the portable-terminal holder according to the first embodiment of the present invention is coupled to a portable terminal and elastically spread or bent, and FIG. 5 is a side view illustrating a state in which the portable terminal is inclinedly supported using the portable-terminal holder according to the first embodiment of the present invention.

As shown in FIGS. 4 and 5, a portable-terminal holder 10 according to the present invention is coupled to a rear surface of a portable terminal 300 to inclinedly support the portable terminal 300 against the ground.

As illustrated in FIGS. 1 and 2, the portable-terminal holder 10 according to the present invention includes a plate spring 100 and a coupling member 200.

The plate spring 100 has a structure which may be elastically deformed into one of a spread state and a bent state by an external force and may maintain the state.

The plate spring 100 has a bar shape which is formed long in a lengthwise direction (an X-axial direction) and formed to be narrow in a widthwise direction (a Y-axial direction) in the spread state. As illustrated in FIG. 3A, when seeing from the X-axial direction in the spread state, the plate spring 100 is formed to be bent convexly in an arc shape in a thicknesswise direction (a Z-axial direction) of the plate spring 100 opposite to the portable terminal 300.

The plate spring 100 having the above-mentioned structure is changed from the spread state illustrated in FIG. 4A into the bent state illustrated in FIG. 4B by an external force pressing a center thereof.

More specifically, the plate spring 100 forms the spread state having the bar shape due to the external force by which both ends thereof are spread, or forms the bent state due to the external force pressing the center of the plate spring 100, by which the both ends thereof are bent in the arc shape in the direction opposite to the portable terminal 300.

That is, if a user presses the center of the plate spring 100 in the spread state of the plate spring 100, the both ends of the plate spring 100 are bent in the arc shape in the direction opposite to the portable terminal 300 and changed into the bent state as illustrated in FIG. 4B, and then maintain the state. And if the user presses the both ends of the plate spring 100 in the bent state of the plate spring 100, in a direction toward the portable terminal 300, the plate spring 100 is changed again into the spread state having the bar shape, as illustrated in FIG. 4A, and then maintains the state.

The coupling member 200 couples the plate spring 100 to the rear surface of the portable terminal 300.

As illustrated in FIG. 2, the coupling member 200 includes an exterior member 210 and an adhesive member 250.

The exterior member 210 is formed of leather, cloth, silicone, synthetic resin, or the like, is formed to cover upper and lower surfaces of the plate spring 100, and has wing portions 212 formed at both sides thereof to protrude.

In FIGS. 1 and 2, the exterior member 210 is formed to be divided into an upper portion and a lower portion.

The adhesive member 250 is configured with a double-sided tape, an adhesive, or the like, and serves to couple the wing portions 212 to the rear surface of the portable terminal 300.

Due to this configuration, the holder 10 of the present invention is coupled to the rear surface of the portable terminal 300, and may serve as a supporter configured to inclinedly support the portable terminal 300.

To this end, the plate spring 100 has a height h1 in the bent state, which is greater than a height h2 in the spread state, as illustrated in FIG. 4, and thus inclinedly supports the portable terminal 300 against the ground in the bent state, as illustrated in FIG. 5.

The portable terminal 300 to which the holder 10 of the present invention is installed may be disposed in a transverse direction illustrated in FIG. 5A or a longitudinal direction illustrated in FIG. 5B, and then an inclined angle thereof may be adjusted.

Meanwhile, the holder 10 of the present invention may further include a protective case (not shown) configured to cover the portable terminal 300.

At this time, the coupling member 200 couples the plate spring 100 to a rear surface of the protective case so that the plate spring 100 is coupled to the rear surface of the portable terminal 300 through the protective case.

It is sufficient as long as the protective case is configured with a conventional well-known case.

Further, in the holder 10 of the present invention, as illustrated in FIG. 4B, since the both ends of the plate spring 100 are bent in the arc shape, the user may grasp the portable terminal 300 by inserting fingers into an inner side of the bent plate spring 100, and thus the user may easily grasp and watch the portable terminal 300 even when moving.

As described above, in the present invention, when the plate spring 100 is not used as the holder, the both ends of the plate spring 100 are pushed toward the portable terminal 300 and changed into the spread state to be in close contact with the rear surface of the portable terminal 300, such that a volume thereof may be reduced and interference with other articles may be prevented.

And when the plate spring 100 is used as the holder, the center of the plate spring 100 is pressed in an one-touch direction so that the both ends of the plate spring 100 is changed into the bent state in which the both ends thereof are bent in the direction opposite to the portable terminal 300, and thus the portable terminal 300 may be inclinedly supported.

Therefore, in a state in which the holder 10 of the present invention is always coupled to the portable terminal 300, the plate spring 100 may be easily changed into the spread state or the bent state by the external force applied by the user, and then maintained in the state. Therefore, the holder 10 of the present invention has excellent portability and usability.

Further, as described above, in a state in which the plate spring 100 is bent, the user may insert the fingers into the inner side of the plate spring 100, and may easily grasp the portable terminal 300 even when moving.

### <Second embodiment>

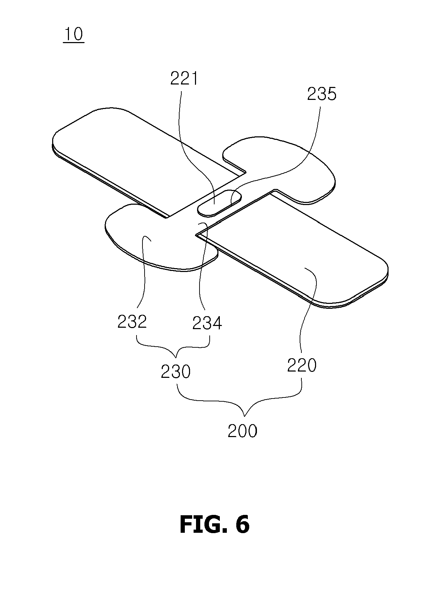

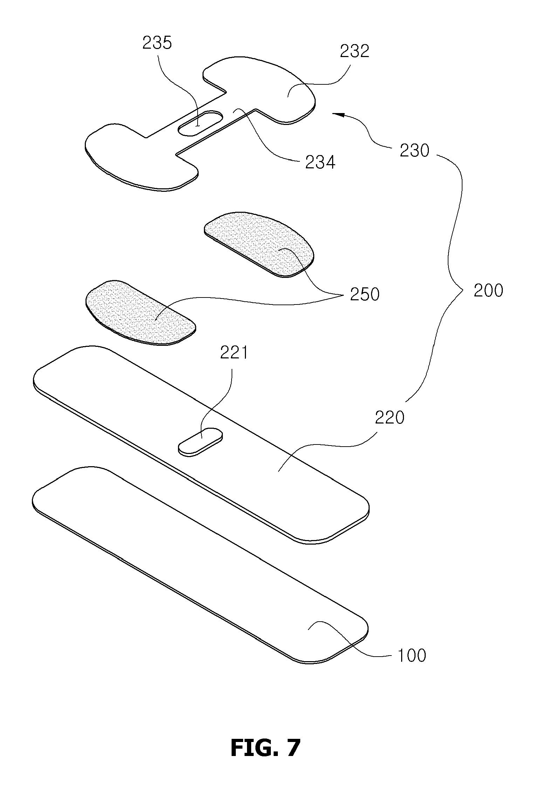

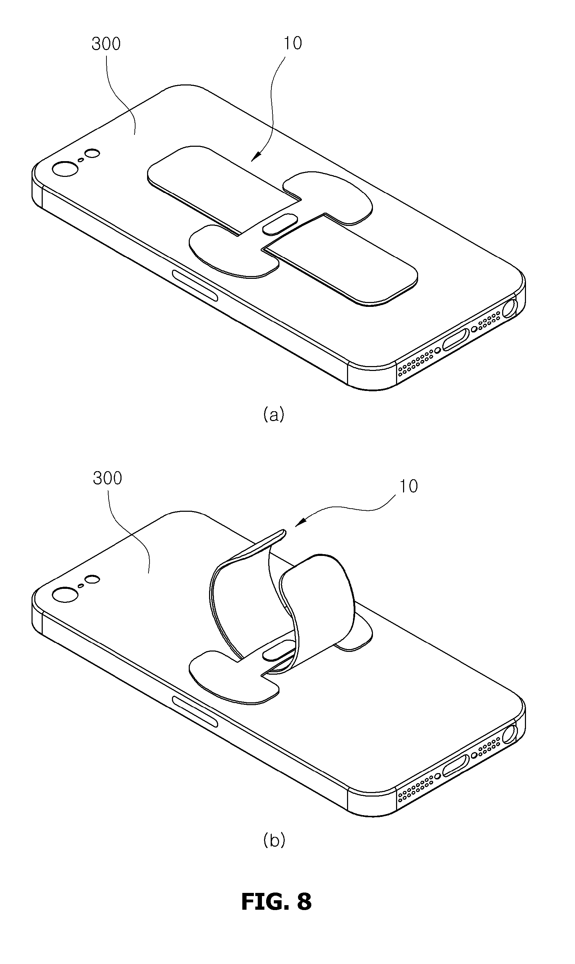

FIG. 6 is a perspective view of a portable-terminal holder according to a second embodiment of the present invention, FIG. 7 is an exploded perspective view of the portable-terminal holder according to the second embodiment of the present invention, and FIG. 8 is a perspective view illustrating states in which the portable-terminal holder according to the second embodiment of the present invention is coupled to a portable terminal and elastically spread or bent.

As illustrated in FIGS. 6 to 8, a portable-terminal holder 10 according to a second embodiment has the same plate spring 100 and a different coupling member 200, when compared with the first embodiment. Hereinafter, the coupling member 200 will be mainly described.

As illustrated in FIGS. 6 and 7, the coupling member 200 includes an exterior member 220, a cover member 230, and an adhesive member 250.

In FIG. 6, the plate spring 100 is received in the exterior member 220 and thus not illustrated.

The exterior member 220 is formed of silicone, synthetic resin, or the like, and formed to cover upper and lower surfaces of the plate spring 100.

At this time, the plate spring 100 and the exterior member 220 are integrally formed through an insert-injection molding or the like. The cover member 230 serves to cover the exterior member 220, and includes wing portions 232 and a connection portion 234.

Two wing portions 232 are provided and disposed at both sides of the plate spring 100, i.e., in a Y-axial direction, and coupled to the rear surface of the portable terminal 300 by the adhesive member 250.

The connection portion 234 serves to connect the two wing portions 232, and is arranged across an upper surface of the exterior member 220.

The wing portion 232 and the connection portion 234 are integrally formed, and the connection portion 234 has a coupling hole 235 which is penetrated toward the plate spring 100.

The exterior member 220 has a coupling protrusion 221 which is inserted into the coupling hole 235.

As described above, since the coupling protrusion 221 is inserted into the coupling hole 235, the coupling member 200 may prevent separation of the plate spring 100.

At this time, since the coupling protrusion 221 is formed of the silicone, the synthetic resin, or the like which is used as a material of the exterior member 220, the coupling protrusion 221 has a desired strength, and thus is not easily separated from the coupling hole 235.

If necessary, the coupling protrusion 221 may be formed of a separate high strength material, and then coupled.

The adhesive member 250 is configured with a double-sided tape, a bond, or the like, and coupled to the cover member 230, specifically the rear surface of the portable terminal 300.

The holder 10 of the embodiment may further include a protective case 260 and so on, like in the first embodiment. Other things are the same as those in the first embodiment, and thus the descriptions thereof will be omitted.

### <Third embodiment>

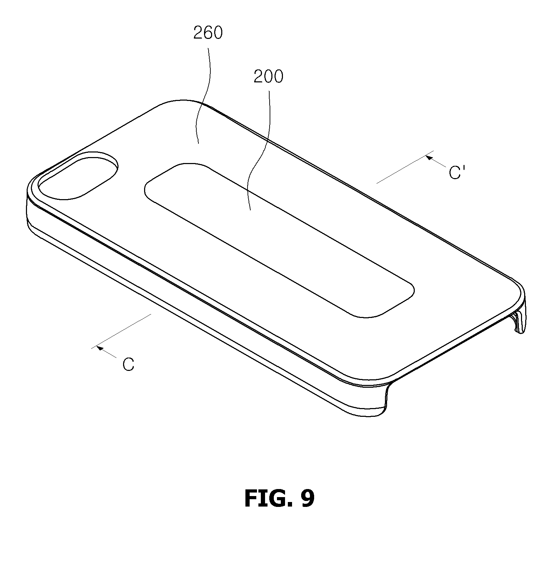

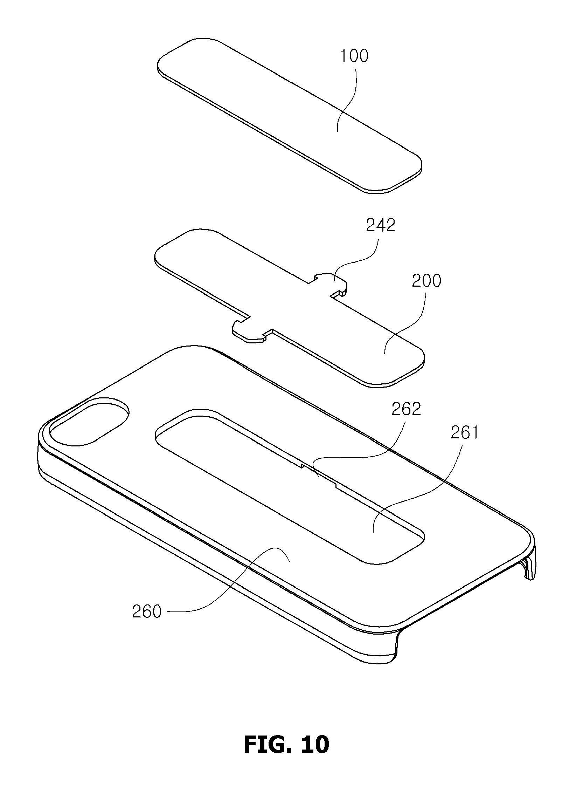

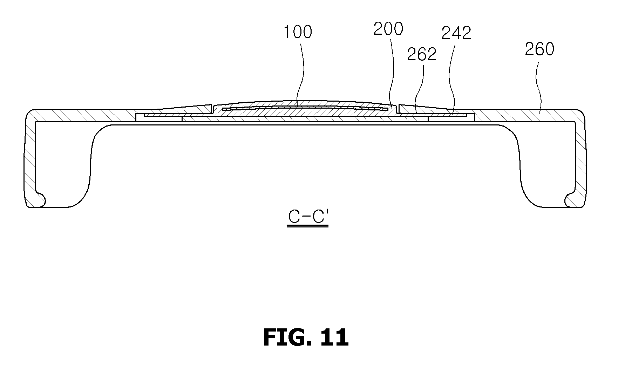

FIG. 9 is a perspective view of a portable-terminal holder according to a third embodiment of the present invention, FIG. 10 is an exploded perspective view of the portable-terminal holder according to the third embodiment of the present invention, and FIG. 11 is a cross-sectional view taken along line C-C' of FIG. 9.

As illustrated in FIGS. 9 to 11, a portable-terminal holder 10 according to a third embodiment includes a plate spring 100, a coupling member 200, and a protective case 260.

The plate spring 100 is the same as that in the first embodiment, but the coupling member 200 and the protective case 260 are different from those in the first embodiment. Therefore, the coupling member 200 and the protective case 260 will be mainly described.

In FIG. 9, the plate spring 100 is received in the coupling member 200 and thus not illustrated.

As illustrated in FIG. 10 and 11, the coupling member 200 covers the plate spring 100 and has wing portions 242 formed at both sides thereof to protrude.

At this time, the coupling member 200 is formed of silicone or synthetic resin which may be elastically deformed and has a desired strength.

Each of the wing portions 242 has a hooking portion which is formed to protrude in a lengthwise direction of the plate spring 100, i.e., an X-axial direction.

Insertion fixing holes 262 in which the wing portions 242 are respectively inserted and coupled are formed at the protective case 260 configured to cover the portable terminal 300.

Therefore, the plate spring 100 is coupled to the rear surface of the portable terminal 300 through the protective case 260.

At this time, an installation groove 261 in which the plate spring 100 is inserted and disposed is formed at the rear surface of the protective case 260, and the insertion fixing holes 262 are formed at both sides of the installation groove 261.

Since the installation groove 261 in which the plate spring 100 is inserted and disposed is provided, the plate spring 100 in the spread state do not protrude to an outside.

In a method of inserting and fixing the wing portions 242 into the insertion fixing holes 262, the wing portions 242 are elastically deformed and inserted into the insertion fixing holes 262, and then the hooking portions are elastically restored and hooked to the insertion fixing holes 262, and thus the plate spring 100 may be coupled to the protective case 260.

Other things are the same as those in the first embodiment, and thus the descriptions thereof will be omitted.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. A portable-terminal holder which is to be coupled to a rear surface of a portable terminal to inclinedly support the portable terminal against the ground, comprising:
a plate spring elastically deformed into a spread state or a bent state and maintained in the deformed state; and
a coupling member to couple the plate spring to the rear surface of the portable terminal,
wherein the plate spring has a height (h1) in the bent state, which is greater than a height (h2) in the spread state, and thus inclinedly supports the portable terminal against the ground in the bent state.

2. The holder of claim 1, wherein the plate spring in the spread state is changed into the bent state by an external force pressing the plate spring.

3. The holder of claim 2, wherein the plate spring has a bar shape with a length in an X-axial direction, a width in a Y-axial direction and a thickness in a Z-axial direction, and the bar shape has the length greater than the width in the spread state; and
when seeing from the X-axial direction in the spread state, the plate spring is formed to be bent convexly in an arc shape in the Z-axial direction of the plate spring opposite to the portable terminal.

4. The holder of claim 3, wherein the plate spring is changed into the spread state having the bar shape of which both ends are spread or in the bent state of which the both ends are bent in the arc shape in a direction opposite to the portable terminal by the external force.

5. The holder of claim 4, wherein the coupling member comprises:
an exterior member to cover the plate spring and having wing portions at both sides thereof to protrude; and
an adhesive member to couple the wing portions to the rear surface of the portable terminal.

6. The holder of claim 4, wherein the coupling member comprises an exterior member to cover the plate spring, a cover member to cover the exterior member, and an adhesive member to couple the cover member to the rear surface of the portable terminal, and
the cover member comprises wing portions at both sides of the plate spring so that the adhesive member is coupled thereto, and a connection portion to connect the wing portions and disposed on an upper surface of the exterior member, and
the connection portion has a coupling hole, and the exterior member has a coupling protrusion which is inserted into the coupling hole.

7. The holder of claim 1, further comprising a protective case to cover the portable terminal,
wherein the coupling member couples the plate spring to a rear surface of the protective case so that the plate spring is able to be coupled to the rear surface of the portable terminal through the protective case.

8. The holder of claim 4, further comprising a protective case to cover the portable terminal,
wherein the coupling member is formed to cover the plate spring and has wing portions formed at both sides thereof, and
the protective case has insertion fixing holes in which the wing portions are inserted and coupled so that the plate spring is coupled to the rear surface of the portable terminal.

9. The holder of claim 8, wherein an installation groove in which the plate spring is inserted and disposed is formed at a rear surface of the protective case, and
the insertion fixing holes are formed at both sides of the installation groove.
